# EUROPÄISCHE PATENTSCHRIFT

(11) **EP 3 622 482 B1**
(45) Veröffentlichungstag und Bekanntmachung des Hinweises auf die Patenterteilung: **23.08.2023**
(21) Anmeldenummer: 18717615.1
(22) Anmeldetag: 13.04.2018
(51) Int. Cl.: G06T 9/00

(54) **COMPUTERIMPLEMENTIERTES VERFAHREN ZUR KOMPRIMIERUNG EINER DIGITALEN DARSTELLUNG EINES OBJEKTS**
COMPUTER-IMPLEMENTED METHOD FOR COMPRESSING A DIGITAL REPRESENTATION OF AN OBJECT
PROCÉDÉ MIS EN OEUVRE PAR ORDINATEUR POUR LA COMPRESSION D'UNE REPRÉSENTATION NUMÉRIQUE D'UN OBJET

(30) Priorität: 12.05.2017 DE 102017110338
(43) Veröffentlichungstag der Anmeldung: 18.03.2020
(73) Patentinhaber: Volume Graphics GmbH, 69115 Heidelberg (DE)
(72) Erfinder: POLIWODA, Christoph, 69115 Heidelberg (DE); GÜNTHER, Thomas, 69115 Heidelberg (DE); REINHART, Christof, 69115 Heidelberg (DE)
(74) Vertreter: Patentanwälte Olbricht Buchhold Keulertz
(86) Internationale Anmeldenummer: PCT/EP2018/059575
(87) Internationale Veröffentlichungsnummer: WO 2018/206224

(56) Entgegenhaltungen:
- US-A1- 2004 101 162
- CANELHAS DANIEL R ET AL: "From Feature Detection in Truncated Signed Distance Fields to Sparse Stable Scene Graphs", IEEE ROBOTICS AND AUTOMATION LETTERS, IEEE, vol. 1, no. 2, 1 July 2016 (2016-07-01), pages 1148-1155, XP011604189, DOI: 10.1109/LRA.2016.2523555 [retrieved on 2016-03-22]
- SAGAWA R ET AL: "Hole Filling of a 3D Model by Flipping Signs of a Signed Distance Field in Adaptive Resolution", IEEE TRANSACTIONS ON PATTERN ANALYSIS AND MACHINE INTELLIGENCE, IEEE COMPUTER SOCIETY, USA, vol. 30, no. 4, 1 April 2008 (2008-04-01), pages 686-699, XP011202098, ISSN: 0162-8828

## Beschreibung

Die Erfindung betrifft ein computerimplementiertes Verfahren zur Komprimierung einer digitalen Darstellung eines Objekts gemäß dem Wortlaut des Anspruchs 1 sowie ein entsprechendes Computerprogrammprodukt nach Anspruch 13 Der Bedarf für Algorithmen zur Komprimierung von digitalen Darstellungen von Objekten ist im Stand der Technik allgegenwärtig erkennbar. Beispielsweise werden bei der Untersuchung von Objekten, wie Werkstücken, mittels eines Computertomographen Datensätze erzeugt, deren Größe schnell mehrere Gigabyte pro untersuchtem Werkstück überschreiten kann. Im Bereich der Inline-Werkstückprüfung mittels einer zerstörungsfreien Messung der Werkstücke können so sehr schnell sehr große Datenmengen entstehen, welche eine effiziente Prüfung und insbesondere eine Archivierung der Prüfergebnisse nicht praktikabel macht.

Kompressionsalgorithmen sind für solche Messdaten, wie sie beispielsweise bei der Prüfung von Werkstücken mit Hilfe der Computertomographie entstehen, im Stand der Technik in vielfältigen Ausgestaltungen bekannt. Insbesondere im Bereich der Werkstückprüfung muss durch einen solchen Kompressionsalgorithmus stets gewährleistet sein, dass der Informationsverlust durch eine Komprimierung der entsprechenden Datensätze einen eng begrenzten Toleranzbereich nicht überschreitet. Andernfalls könnten die komprimierten Messdaten beispielsweise nicht für eine nachträgliche, belastbare Analyse der untersuchten Werkstücke herangezogen werden können.

Vor diesem Hintergrund liegt der vorliegenden Erfindung nun die Aufgabe zugrunde, ein verbessertes Verfahren zur Komprimierung einer digitalen Darstellung eines Objekts bereitzustellen, welches die zuvor genannten Nachteile des Standes der Technik überwindet. Hauptmerkmale der Erfindung sind im kennzeichnenden Teil von Anspruch 1 sowie in Anspruch 13 angegeben. Ausgestaltungen sind Gegenstand der Ansprüche 2 bis 12

In einem ersten Aspekt betrifft die Erfindung ein computerimplementiertes Verfahren zur Komprimierung einer digitalen Darstellung eines Objekts, wobei die Objektdarstellung eine Vielzahl von Bildinformationen des Objekts aufweist. Eine Bildinformation zeigt dabei einen Wert einer Messgröße für das Objekt an einer definierten Position des Objekts an. Das Verfahren weist dabei die nachfolgenden Schritte auf:
In einem ersten Verfahrensschritt wird zunächst die Objektdarstellung ermittelt. Anschließend wird aus den Bildinformationen der Objektdarstellung ein Distanzfeld ermittelt, wobei das Distanzfeld eine Vielzahl von in einem Raster angeordneten Datenpunkten aufweist. Das Distanzfeld ordnet dabei den Datenpunkten jeweils wenigstens einen Distanzwert zu, wobei der Distanzwert jeweils den kürzesten Abstand des Datenpunktes zu einer nächstgelegenen Materialgrenzfläche des Objekts angibt. Anschließend wird ein Nahbereich um eine Materialgrenzfläche des Objekts ermittelt. Ausgehend von diesem Nahbereich wird dann eine Teilmenge von Datenpunkten des Distanzfeldes ermittelt, welche außerhalb des Nahbereichs der Materialgrenzfläche liegen. Die so ermittelte Teilmenge von Datenpunkten wird dann aus dem Distanzfeld gelöscht und das Distanzfeld als komprimierte Objektdarstellung gespeichert.

Bei dem dargestellten Objekt kann es sich beispielsweise um ein Werkstück wie ein Bauteil für eine Maschine oder ein Fahrzeug handeln. Dieses kann in einer zunächst beliebigen Art digital dargestellt sein. Beispielsweise kann es sich bei der digitalen Darstellung um eine aus einer Messung gewonnene Abbildung des Objekts handeln. Dabei werden durch die Abbildung des Objekts bzw. durch die digitale Darstellung des Objekts Eigenschaften des Objekts anhand von Bildinformationen abgebildet. Die durch die Bildinformation codierten Messgrößen können beispielsweise die Art des Materials des Objekts in bestimmten Bereichen darstellen. Die Abbildung des Objekts kann sowohl zweidimensional als auch dreidimensional sein.

Unter einer Materialgrenzfläche eines solchen Objekts ist dabei der Übergang von einem ersten Material zu einem zweiten Material zu verstehen. Beispielsweise kann es sich bei einer Materialgrenzfläche um eine Außenkante des Materials handeln, an der das Material des Objekts, beispielsweise ein Metall, in die das Objekt umgebende Luft übergeht. Somit kann durch Materialgrenzflächen beispielsweise eine Oberfläche des Objekts dargestellt sein. Ferner kann eine Materialgrenzfläche auch innerhalb eines Objekts existieren, wenn beispielsweise unterschiedliche Bereiche des Objekts aus unterschiedlichen Materialien bestehen. Der im Zuge der Bestimmung des Distanzfeldes ermittelte kürzeste Abstand eines Datenpunktes zu einer solchen Materialgrenzfläche erstreckt sich dabei von einer Materialgrenzfläche ausgehend im Allgemeinen senkrecht zu dieser Materialgrenzfläche zu dem Datenpunkt, dem der Distanzwert letztendlich zugeordnet ist.

Der zur Ermittlung der Teilmenge von Datenpunkten, welche anschließend aus dem Distanzfeld gelöscht werden können, verwendete Nahbereich beschreibt im weitesten Sinne eine Umgebung um eine Materialgrenzfläche des Objekts. Der Nahbereich kann dabei auf verschiedene Weisen definiert sein, welche im Folgenden noch näher erläutert werden. Das Löschen der Datenpunkte kann dabei sowohl das Entfernen der Datenpunkte aus einem Datensatz, als auch das Überschreiben der den Datenpunkten zugeordneten Distanzwerte mit einem vordefinierten Wert umfassen.

Dem zuvor beschriebenen Verfahren liegt die Erkenntnis zugrunde, dass bei einer Darstellung eines Objekts als Distanzfeld Datenpunkte, welche einen gewissen Abstand zu einer Materialgrenzfläche des dargestellten Objekts überschreiten, keine Mehrinformation für eine Darstellung der Materialgrenzflächen des Objekts liefern können. Vielmehr kann die ihnen zugeordnete Information bezüglich der Lage einer Materialgrenzfläche üblicherweise auch aus der Gesamtheit der Datenpunkte abgeleitet werden, welche näher an der Materialgrenzfläche liegen. Folglich können Datenpunkte, welche außerhalb eines gewissen Bereiches um eine Materialgrenzfläche angeordnet sind, aus dem das Objekt darstellenden Distanzfeld gelöscht werden, ohne dass hierdurch ein Informationsverlust bezüglich der Geometrie des Objekts zu befürchten wäre. Insgesamt wird demnach durch das erfindungsgemäße Verfahren ein Weg für eine verlustfreie Kompression einer digitalen Darstellung des Objekts bereitgestellt. Wenn es sich bei dem Objekt beispielsweise um einen massiven Metallkörper handelt, kann aus der Kenntnis der Materialgrenzflächen das vollständige Objekt rekonstruiert werden. Folglich ist die Darstellung des Objekts als Distanzfeld ausreichend, um den gesamten Körper darzustellen.

Die zuvor beschriebene Rekonstruktion der Distanzinformation, welche in einem Datenpunkt außerhalb des Nahbereiches codiert ist, aus den Datenpunkten, welche innerhalb des Nahbereiches angeordnet sind, ist insbesondere dann mit geringem Aufwand möglich, wenn es sich nach einer Ausführungsform bei dem Raster des Distanzfeldes um ein orthogonales Gitter handelt. Unter einem orthogonalen Gitter ist dabei jedes Gitter zu verstehen, bei dem die Verbindungslinien benachbarter Datenpunkte stets orthogonal aufeinander stehen. In einem solchen Gitter kann aus einfachen trigonometrischen Überlegungen aus der Kenntnis des Distanzwertes eines Satzes von Datenpunkten auf den Distanzwert eines anderen Datenpunktes in deren näherer Umgebung zurückgeschlossen werden. Folglich ist ein orthogonales Gitter zur Codierung der Oberfläche eines Objekts besonders vorteilhaft.

Nach einer bevorzugten Ausführungsform handelt es sich dabei ferner um ein isotropes Gitter, was die Rekonstruktion eines Distanzwertes eines Datenpunktes nochmals erleichtert. Unter einem isotropen Gitter ist dabei ein Gitter zu verstehen, dass sich ausgehend von einem bestimmten Datenpunkt in jede Richtung des Gitters in gleicher Form fortsetzt. Ein Beispiel für ein solches isotropes, orthogonales Gitter ist beispielsweise eine Anordnung von Datenpunkten an den jeweiligen Ecken von regelmäßig angeordneten Würfeln.

Es ist jedoch durchaus möglich, dass nach einer Ausführungsform die Größe von Elementarzellen des Rasters des Distanzfeldes lokal unterschiedlich ist. Unter einer "Elementarzelle" des Rasters ist dabei eine Zelle, also eine Gruppe von benachbarten Datenpunkten zu verstehen, aus der das Gitter in einem bestimmten Bereich aufgebaut werden kann. In dem oben bezeichneten Beispiel eines isotropen, orthogonalen Gitters, wäre die Elementarzelle des Gitters ein Würfel. Bei einem anisotropen Gitter gibt es im Unterschied hierzu eine Vielzahl von lokalen Elementarzellen, aus denen das Distanzfeld zumindest in einem Teilbereich aufgebaut ist. In einem stark anisotropen Gitter ist es sogar möglich, dass das Gitter ausschließlich aus unterschiedlichen, lokalen Elementarzellen aufgebaut ist.

Durch eine veränderliche Größe der Elementarzellen eines Gitters kann in Bereichen, in denen die Oberfläche des dargestellten Objekts weitgehend homogen, beispielsweise plan, ist, ein grobmaschiges Raster gewählt werden, ohne dass hierdurch ein Informationsverlust zu befürchten wäre. In Bereichen, in denen das Objekt eine stark inhomogene Oberfläche, beispielsweise starke gekrümmte Bereiche oder Ecken oder Wellen, aufweist, kann hingegen das Raster des Distanzfeldes sehr engmaschig gewählt werden, um eine hinreichend genaue Darstellung des Objekts zu gewährleisten. Die Definition von Bereichen bzw. entsprechenden Größen von Elementarzellen des Rasters kann dabei sowohl automatisch aus dem dargestellten Objekt abgeleitet werden als auch durch eine externe Nutzereingabe vorgegeben werden.

Wie zuvor bereits ausgeführt wurde, kann der Nahbereich auf verschiedenen Wegen ermittelt werden. Beispielsweise ist nach einer ersten Ausführungsform der Nahbereich einer Materialgrenzfläche durch einen Grenzwert für einen Distanzwert eines Datenpunktes definiert, wobei die jeweiligen Distanzwerte der Datenpunkte der Teilmenge von Datenpunkten größer als der Grenzwert sind. Effektiv wird durch diese Vorgehensweise die Breite einer Umgebung um die Materialgrenzfläche definiert und alle Datenpunkte, deren Distanzwert größer als der definierte Grenzwert ist, welche also außerhalb der Umgebung liegen, werden aus dem Distanzfeld gelöscht. Die beschriebene Ausführungsform hat dabei den Vorteil, dass die Definition eines Grenzwertes und die anschließende Auswahl von Datenpunkten, deren Distanzwert größer als dieser Grenzwert ist, sehr leicht zu implementieren ist und einen geringen rechnerischen Aufwand nach sich zieht. Dabei kann der Grenzwert im Allgemeinen zunächst frei definiert werden.

Zur Definition des Grenzwertes ist dabei nach einer weiteren Ausführungsform vorgesehen, dass der Grenzwert für den Abstand dem maximalen Abstand zwischen zwei Punkten innerhalb einer lokalen Elementarzelle des Rasters des Distanzfeldes entspricht, innerhalb der sich eine Materialgrenzfläche erstreckt. Auch hier ist wieder unter einer "Elementarzelle" des Rasters eine Zelle zu verstehen, aus der das Raster aufgebaut werden kann. Durch die Definition des Grenzwertes als maximalem Abstand zwischen zwei Punkten innerhalb einer solchen lokalen Elementarzelle werden effektiv all jene Datenpunkte durch den Grenzwert ausgeschlossen, welche mindestens mehr als eine Elementarzelle von der Materialgrenzfläche entfernt liegen. Für solche Datenpunkte ist dabei bei einem isotropen Gitter stets gewährleistet, dass ein Datenpunkt existiert, welcher näher an der Materialgrenzfläche angeordnet ist, sodass die um mindestens eine Elementarzelle von der Materialgrenzfläche entfernten Datenpunkte keine Zusatzinformation zur Definition der Materialgrenzfläche liefern können.

Nach einer hierzu alternativen Ausführungsform kann der Grenzwert auch durch eine Nutzereingabe vorgegeben werden. Beispielsweise kann hierzu das dargestellte Objekt einem Nutzer auf einem Display präsentiert werden, wobei der Nutzer für verschiedene Bereiche des Objekts entsprechende Grenzwerte definieren kann. Dabei kann der Nutzer beispielsweise sein spezifisches Fachwissen bezüglich der Geometrie des Objekts in die Definition des Grenzwertes einfließen lassen.

In einer weiteren Ausführungsform kann der Grenzwert für den Abstand für unterschiedliche Bereiche der Objektdarstellung jeweils einen anderen Zahlenwert aufweisen. Dies ergibt sich beispielsweise automatisch dann, wenn der Grenzwert, wie zuvor ausgeführt wurde, als maximaler Abstand innerhalb einer Elementarzelle definiert ist, wobei die Größe der Elementarzellen des Rasters des Distanzfeldes lokal unterschiedlich ist. Durch eine variable Definition des Grenzwertes für den Abstand kann dabei auf lokale geometrische Eigenschaften des Objekts bzw. dessen Oberfläche Rücksicht genommen werden.

Die unterschiedlichen Bereiche, in denen unterschiedliche Grenzwerte für den Abstand definiert sind, können dabei nach einer Ausführungsform durch eine Nutzereingabe definiert werden.

Wie zuvor bereits ausgeführt wurde, gibt es neben dem zuvor beschriebenen Ansatz, einen Grenzwert für einen Abstand der Datenpunkte zu der Materialgrenzfläche zu definieren, weitere Möglichkeiten den Nahbereich festzulegen. Hierzu ist nach einer weiteren Ausführungsform vorgesehen, dass zum Ermitteln der Teilmenge von Datenpunkten zunächst das Raster des Distanzfeldes in eine Vielzahl von Rasterzellen eingeteilt wird, wobei eine Rasterzelle durch Datenpunkte an ihren jeweiligen Eckpunkten begrenzt ist. Anschließend wird eine Teilmenge von Rasterzellen aus der Vielzahl von Rasterzellen ermittelt, innerhalb derer sich eine Materialgrenzfläche erstreckt. Datenpunkte, welche keine Rasterzelle aus der Teilmenge der Rasterzellen begrenzen, werden dann der Teilmenge von Datenpunkten zugeordnet, welche anschließend aus dem Distanzfeld gelöscht werden.

Durch das zuvor beschriebene Verfahren wird das Distanzfeld im Wesentlichen auf die Summe aller Rasterzellen reduziert, innerhalb derer sich eine Materialgrenzfläche erstreckt. Dieses Verfahren kann insbesondere vorteilhaft sein, wenn es sich bei dem Raster, wie zuvor ausgeführt, um ein nichtisotropes Gitter handelt, dessen Elementarzellen lokal unterschiedlich groß sein können. Die Rasterzellen des Rasters des Distanzfeldes können dabei zunächst frei definiert werden.

Nach einer bevorzugten Ausführungsform ist jedoch vorgesehen, dass es sich bei den Rasterzellen um Elementarzellen des als Raster verwendeten Gitters handelt. Die Auswahl von Elementarzellen als Rasterzellen hat dabei den Vorteil, dass ein möglichst enger Bereich um eine Materialgrenzfläche als Distanzfeld beibehalten wird, sodass die erreichbare Komprimierung der digitalen Darstellung optimiert wird.

Wie zuvor bereits ausgeführt wurde, basiert der beschriebene Ansatz zur Definition eines Nahbereiches auf der Ermittlung von Rasterzellen, innerhalb derer sich eine Materialgrenzfläche erstreckt. Nach einer Ausführungsform kann das Ermitteln der Teilmenge von Rasterzellen, innerhalb derer sich eine Materialgrenzfläche erstreckt beispielsweise realisiert sein, indem zunächst eine Rasterzelle aus der Vielzahl von Rasterzellen ausgewählt wird und anschließend Paare von die Rasterzelle begrenzenden Datenpunkten ermittelt werden. Für die so ermittelten Paare werden dann jeweils die Relativabstände der Datenpunkte der Paare voneinander ermittelt sowie die Summe der Distanzwerte der Datenpunkte eines Paares ermittelt. Wenn für wenigstens zwei der Paare von Datenpunkten der ausgewählten Rasterzelle die Summe der Distanzwerte kleiner als der ermittelte Relativabstand ist, wird die Rasterzelle zu der Teilmenge von Rasterzellen zugeordnet und der zuvor beschriebene Verfahrensablauf wird für die Vielzahl von Rasterzellen wiederholt. Dem zuvor beschriebenen Ansatz liegt die Erkenntnis zugrunde, dass die Summe der Distanzwerte benachbarter Datenpunkte immer genau dann kleiner als deren Abstand voneinander ist, wenn sich eine Materialgrenzfläche zwischen den beiden Datenpunkten erstreckt. Somit kann auf einfache Art und Weise ermittelt werden, ob innerhalb einer Rasterzelle eine Materialgrenzfläche angeordnet ist.

In einem hierzu alternativen Ansatz kann nach einer Ausführungsform das Distanzfeld die Distanzwerte auch auf andere Art und Weise codieren. So könnte beispielsweise vorgesehen sein, dass die Distanzwerte der Datenpunkte auf einer ersten Seite einer Materialgrenzfläche positive Werte annehmen, während die Distanzwerte auf einer anderen Seite der Materialgrenzfläche negative Werte annehmen. Eine solche Codierung der Distanzwerte ist auch als "signed distance field" (SDF) bekannt. Wenn die Distanzwerte des Distanzfeldes so codiert sind, kann eine Rasterzelle, innerhalb derer sich eine Materialgrenzfläche erstreckt, beispielsweise auch ermittelt werden, indem Paare von benachbarten Datenpunkten ermittelt werden, zwischen denen ein Vorzeichenwechsel der zugeordneten Distanzwerte erfolgt. Ein solcher Vorzeichenwechsel erfolgt nämlich nur dann, wenn zwischen den Datenpunkten eine Materialgrenzfläche angeordnet ist. Auch durch diesen Ansatz kann auf einfache Art und Weise die zuvor beschriebene Teilmenge von Rasterzellen ermittelt werden.

Liegen die Distanzwerte eines Distanzfeldes lediglich ohne entsprechende Vorzeichen vor, kann nach einer Ausführungsform vorgesehen sein, dass die vorzeichenlosen Distanzwerte des Distanzfeldes in vorzeichenbehaftete Distanzwerte umgewandelt werden, sodass beispielsweise die zuvor beschriebene Ermittlung von Rasterzellen anhand eines vorliegenden Vorzeichenwechsels der zugeordneten Distanzwerte möglich wird. Hierzu können die Distanzwerte des Distanzfeldes so geändert werden, dass die jeweiligen Beträge der Distanzwerte nicht geändert werden, der Gradient des Distanzfeldes jedoch an jeder Stelle des Distanzfeldes gleich 1 ist.

Nach einer weiteren Ausführungsform kann das Ermitteln des Distanzfeldes dadurch realisiert sein, dass zunächst die Lage von Materialgrenzflächen aus den Bildinformationen der Objektdarstellung ermittelt werden. Anschließend wird für die Datenpunkte jeweils die zu einem Datenpunkt nächstliegende Materialgrenzfläche ermittelt und der jeweilige Abstand der Datenpunkte von der jeweiligen nächstliegenden Materialgrenzfläche ermittelt. Anschließend wird der so ermittelte Abstand den jeweiligen Datenpunkten als Distanzwert zugeordnet. Die Lage der Materialgrenzflächen kann dabei nach gängigen Methoden aus den Bildinformationen der Objektdarstellung ermittelt werden. Der zuvor beschriebene Ansatz beschreibt einen einfachen Weg, um ein Distanzfeld aus einer Objektdarstellung abzuleiten.

Nach einer bevorzugten Ausführungsform handelt es sich bei der Objektdarstellung um eine gerasterte Darstellung des Objekts, wobei die gerasterte Darstellung eine Vielzahl von in einem Raster angeordneten Messpunkten einer Messung des Objekts aufweist, wobei ein Messpunkt wenigstens eine Bildinformation aufweist. Bei der Messung kann es sich dabei um ein beliebiges bildgebendes Verfahren handeln, welches eine Abbildung des Objekts ermöglicht. Beispielsweise kann ein Objekt durch eine Magnetresonanztomografie dargestellt sein. Das Raster der Messpunkte kann dabei eine beliebige Form annehmen. Insbesondere kann sich das Raster von dem Raster des Distanzfeldes unterscheiden.

Nach einer bevorzugten Ausführungsform sind die Messpunkte der gerasterten Darstellung jedoch in einem regelmäßigen Gitter angeordnet, welches nach einer weiteren Ausführungsform dem Raster des Distanzfeldes entspricht.

Nach einer weiteren bevorzugten Ausführungsform handelt es sich bei der Messung, aus der die Messpunkte der Objektdarstellung resultieren, um eine computertomografische Messung, wobei die Bildinformation eines Bildpunktes die Röntgendichte des Materials des Objekts an der Stelle des Bildpunktes anzeigt.

In einem weiteren Aspekt betrifft die Erfindung ein Computerprogrammprodukt mit auf einem Computer ausführbaren Instruktionen, welche auf einem Computer ausgeführt den Computer dazu veranlassen, das Verfahren nach einem der vorhergehenden Ansprüche durchzuführen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Es zeigen:
- Figur 1: eine schematische Darstellung einer Objektdarstellung mit einem Distanzfeld,
- Figur 2: eine schematische Darstellung der Auswahl von Datenpunkten des Distanzfeldes anhand eines Grenzwertes für den Distanzwert,
- Figur 3: eine schematische Darstellung der Auswahl von Datenpunkten des Distanzfeldes anhand der Auswahl von Rasterzellen,
- Figur 4: eine schematische Darstellung einer komplexeren Objektgeometrie mit einem lokal unterschiedlich großen Raster des Distanzfeldes und
- Figur 5: ein Flussdiagramm des erfindungsgemäßen Verfahrens.

Im Folgenden werden einander ähnliche oder identische Merkmale mit den gleichen Bezugszeichen gekennzeichnet.

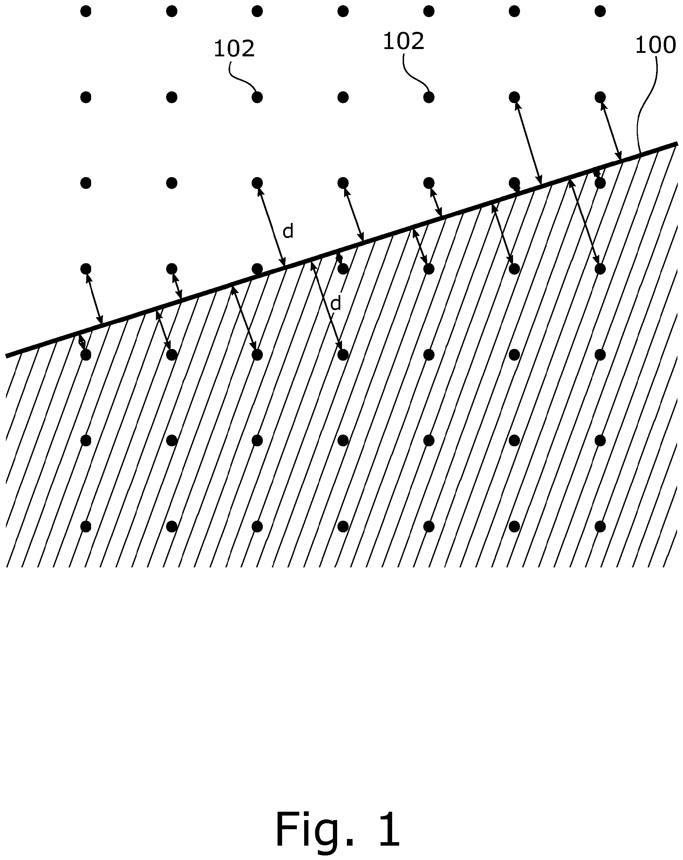

Die Figur 1 zeigt eine schematische Darstellung einer Objektdarstellung, wobei die Objektdarstellung durch ein Distanzfeld überlagert ist. In der dargestellten Ausführung wird das Objekt im Wesentlichen durch seine Materialgrenzfläche 100 dargestellt, welche sich diagonal durch den Bildausschnitt erstreckt. Beispielsweise kann es sich bei der Materialgrenzfläche 100 um den Übergang handeln, an dem ein erstes Material eines dargestellten Objekts an die Umgebungsluft angrenzt. Bei dem dargestellten Objekt kann es sich beispielsweise um ein Werkstück handeln, welches aus einem Metall oder einem Kunststoff besteht.

Wie zuvor bereits ausgeführt wurde, ist die Objektdarstellung durch ein Distanzfeld überlagert. Das Distanzfeld ist in der dargestellten Ausführung im Wesentlichen durch Datenpunkte 102 dargestellt, welche in einem regelmäßigen isotropen Raster die Objektdarstellung überlagern. Neben dem in Figur 1 dargestellten orthogonalen Raster könnte ein Raster zur Darstellung eines Distanzfeldes jede beliebige Geometrie aufweisen, welche geeignet ist, ein fortlaufendes Raster zu bilden. Es wird ferner darauf hingewiesen, dass die in Figur 1 gewählte zweidimensionale Darstellung lediglich aus Gründen der einfacheren Darstellbarkeit gewählt wurde. Die beschriebenen Sachverhalte sind analog auch auf dreidimensionale Darstellungen eines Objekts übertragbar. So ist beispielsweise in Figur 1 ein zweidimensionales Raster aus quadratischen Zellen dargestellt, welches ohne Weiteres in eine dritte Dimension übertragen werden kann, in der das Raster durch gleichmäßige Würfel aufgebaut wäre.

Den einzelnen Datenpunkten 102 des Distanzfeldes sind Distanzwerte zugeordnet, welche beschreiben, wie groß der minimale Abstand zwischen einem Datenpunkt 102 und der Materialgrenzfläche 100 ist. Der minimale Abstand zwischen einem Datenpunkt 102 und der Materialgrenzfläche 100 erstreckt sich im Allgemeinen senkrecht zu der Materialgrenzfläche 100. In der Figur 1 sind exemplarisch die Abstände für eine Teilmenge der Datenpunkte 102 dargestellt, welche sich in unmittelbarer Umgebung der Materialgrenzfläche 100 befinden.

Wie zuvor bereits ausgeführt wurde, besteht ein Kerngedanke der Erfindung darin, dass Datenpunkte 102, welche ausreichend weit von einer Materialgrenzfläche 100 entfernt sind, keinen weiteren Beitrag zur Exaktheit der Darstellung der Materialgrenzfläche 100 liefern, wenn man ihren Informationsgehalt mit dem der Datenpunkte 102 in der unmittelbaren Umgebung der Materialgrenzfläche 100 vergleicht. Ausgehend von dieser Erkenntnis werden im Folgenden zwei Möglichkeiten dargestellt, wie Datenpunkte 102 ausgewählt werden können, die zur Darstellung einer Materialgrenzfläche 100 nicht benötigt werden.

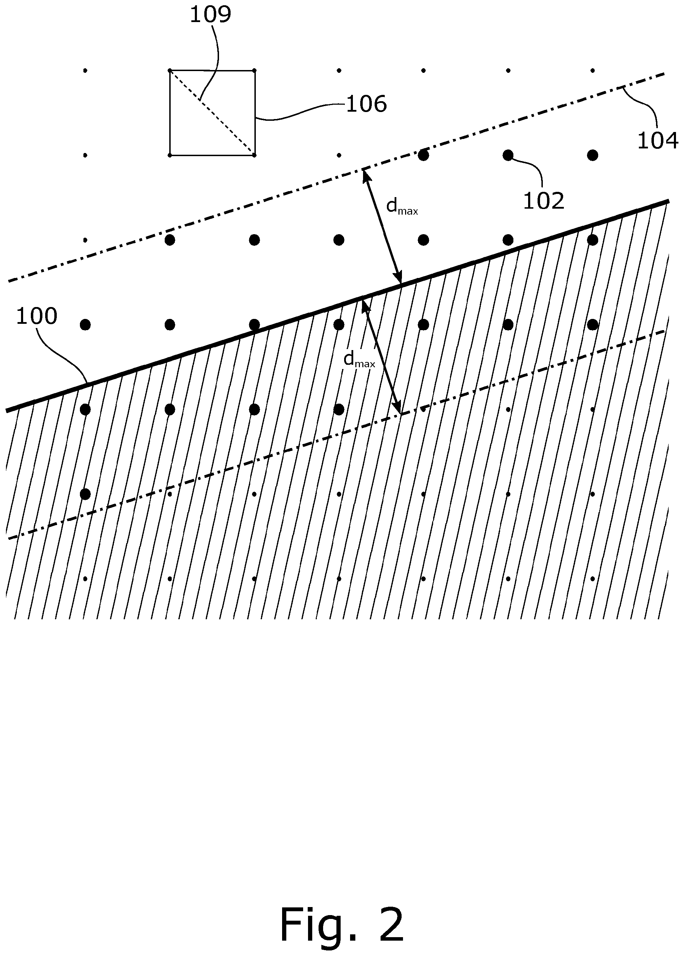

Hierzu ist in Figur 2 schematisch die Materialgrenzfläche 100 der Figur 1 mit den entsprechenden Datenpunkten 102 dargestellt, wobei um die Materialgrenzfläche 100 ein Band definierter Breite dₘₐₓ eingezeichnet ist. Die Figur 2 illustriert den Ansatz, zu löschende Datenpunkte 102 anhand eines Grenzwertes für den Abstand eines Datenpunktes 102 von der Materialgrenzfläche 100 auszuwählen. In dem dargestellten Fall ist dieser Grenzwert durch den Wert dₘₐₓ festgelegt. Da sich das dargestellte Band 104 stets exakt um den Abstand dₘₐₓ von der Materialgrenzfläche 100 beabstandet befindet, erfüllen alle Datenpunkte 102 innerhalb des Bandes 104 die Bedingung, dass ihr Distanzwert kleiner ist als der Grenzwert dₘₐₓ. Folglich ist die ihnen zugeordnete Information in Form eines Distanzwertes zur Darstellung einer Materialgrenzfläche 100 relevant.

Sämtliche Datenpunkte 102, welche jedoch außerhalb des Bandes 104 liegen, sind so weit von der Materialgrenzfläche 100 entfernt, dass stets ein Datenpunkt 102 existiert, welcher näher an der Materialgrenzfläche 100 liegt und hinreichend genau die Lage der Materialgrenzfläche 100 spezifiziert. Folglich können all jene Datenpunkte, welche außerhalb des Bandes 104 angeordnet sind, aus der Menge der Datenpunkte 102 des Distanzfeldes gelöscht werden, ohne dass die Genauigkeit der Darstellung der Materialgrenzfläche 100 durch das Distanzfeld reduziert wird. Das Löschen der Datenpunkte 102 ist in Figur 2 dadurch dargestellt, dass die Datenpunkte 102 außerhalb des Bandes 104 kleiner dargestellt sind, als die Datenpunkte 102 innerhalb des Bandes 104.

Der Wert des Grenzwertes dₘₐₓ für den Abstand eines Datenpunktes 102 von der Materialgrenzfläche 100 kann beispielsweise durch eine Nutzereingabe festgelegt werden. Hierzu kann beispielsweise nach Ermittlung der Objektdarstellung einem Benutzer die Objektdarstellung präsentiert werden, beispielsweise auf einem Monitor, sodass ein Nutzer innerhalb der Objektdarstellung Bereiche und entsprechende Grenzwerte dₘₐₓ für den Abstand der Datenpunkte 102 von der Materialgrenzfläche 100 markieren bzw. festlegen kann. Alternativ kann der Grenzwert dₘₐₓ auch aus den Eigenschaften des Distanzfeldes selbst abgeleitet werden. So ist nach einer zuvor beschriebenen Ausführungsform vorgesehen, dass der Distanzwert dₘₐₓ gerade dem maximalen Abstand zweier Punkte innerhalb einer Elementarzelle des Gitters entspricht. Eine solche Elementarzelle 106 ist in der Figur 2 im oberen, linken Bildbereich exemplarisch eingezeichnet. Die Elementarzelle 106 ist dabei an ihren Ecken jeweils durch einen Datenpunkt 102 begrenzt und so dimensioniert, dass aus einer Aneinanderreihung der Elementarzellen 106 das vollständige Gitter des Distanzfeldes aufgebaut werden kann. Zur Definition des Grenzwertes dₘₐₓ kann in diesem Fall beispielsweise der maximale Abstand zweier Datenpunkte 102 innerhalb einer Elementarzelle 106 herangezogen werden. In dem in Figur 2 dargestellten Beispiel handelt es sich bei dem maximalen Abstand zweier Datenpunkte 102 innerhalb einer Elementarzelle 106 um die Länge Diagonale 109 der Elementarzelle 106. Jeder Datenpunkt 102, welcher um mehr als die Länge der Diagonale 109 der Elementarzelle 106 von der Materialgrenzfläche 100 entfernt liegt, ist stets so weit von der Materialgrenzfläche 100 entfernt, dass ein anderer Datenpunkt 102 näher an der Materialgrenzfläche 100 liegt und folglich ausreicht, um die Lage der Materialgrenzfläche 100 mit hinreichender Genauigkeit festzulegen.

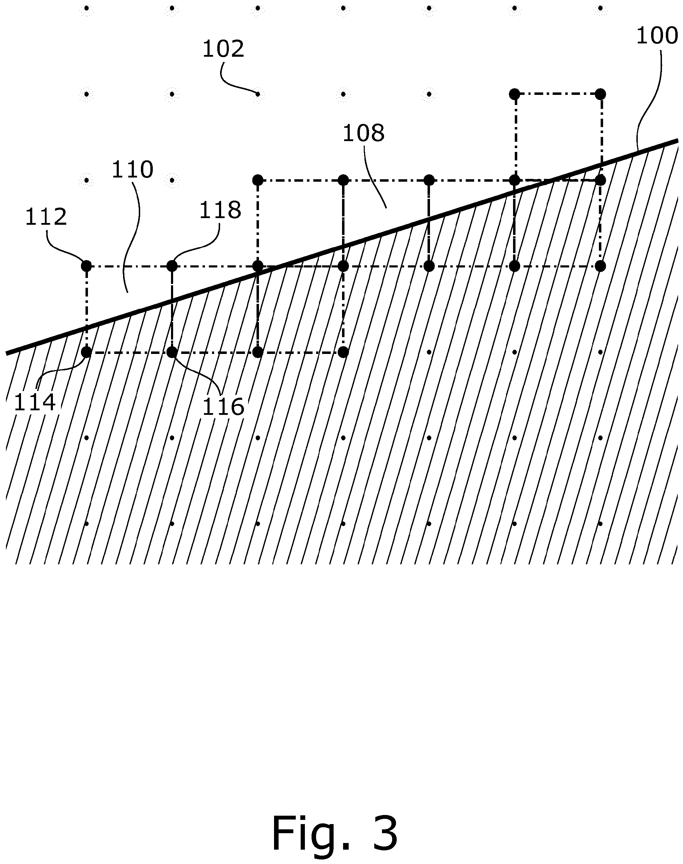

Die Figur 3 zeigt einen zu Figur 2 alternativen Ansatz, mit dem eine Teilmenge von Datenpunkten 102 ermittelt werden kann, welche zur Darstellung der Lage der Materialgrenzfläche 100 ausreichend sind. Dabei geht die Figur 3 von derselben Situation wie die Figuren 1 und 2 aus, in der eine Materialgrenzfläche 100 sich diagonal durch den Bildausschnitt erstreckt und von einem Distanzfeld überlagert ist. In dem in Figur 3 dargestellten Ansatz werden Datenpunkte 102 ausgewählt, indem Rasterzellen 108 ermittelt werden, innerhalb derer sich die Materialgrenzfläche 100 erstreckt. Unter einer Rasterzelle 108 ist dabei eine Zelle des Rasters bzw. Gitters des Distanzfeldes zu verstehen, welche an ihren Ecken jeweils durch einen Datenpunkt 102 begrenzt ist. Dabei kann es sich bei einer Rasterzelle durchaus um eine Elementarzelle 106 eines Rasters bzw. Gitters handeln, wie es in Figur 2 schematisch dargestellt ist. Es ist jedoch auch möglich, dass die Rasterzellen 108 auf andere Art und Weise gewählt werden.

In dem in Figur 3 dargestellten Ansatz sind Elementarzellen 106 des Gitters als Rasterzellen 108 ausgewählt. Ferner sind in der Figur 3 alljene Rasterzellen 108 dargestellt, welche von der Materialgrenzfläche 100 durchsetzt sind. Erfindungsgemäß werden ausgehend von den so dargestellten Rasterzellen 108 all jene Datenpunkte beibehalten, welche zumindest eine Rasterzelle 108 begrenzen, durch die sich eine Materialgrenzfläche 100 erstreckt. Alle weiteren Datenpunkte 102, welche keine solche Rasterzelle 108 begrenzen, werden aus dem Datensatz des Distanzfeldes gelöscht.

Zur Ermittlung der Rasterzellen 108 kann beispielsweise wie folgt vorgegangen werden. Zunächst wird eine Rasterzelle 108 aus der Menge der Rasterzellen 108 des Distanzfeldes ausgewählt werden. Exemplarisch wird hierzu beispielsweise die mit 110 bezeichnete Rasterzelle 108 angeführt. Die Rasterzelle 110 ist an ihren Ecken jeweils durch die Datenpunkte 112, 114, 116 und 118 begrenzt. Zur Feststellung, ob die Rasterzelle 110 von einer Materialgrenzfläche 100 durchsetzt ist, werden zunächst Paare von Datenpunkten ausgewählt, welche die Rasterzelle 110 begrenzen. Beispielsweise kann ein erstes Paar von Datenpunkten die Datenpunkte 114 und 116 umfassen. Für diese beiden Datenpunkte 114, 116 wird dann einmal die Summe ihrer Distanzwerte ermittelt sowie der relative Abstand der Datenpunkte 114 und 116 voneinander. Wenn durch den Vergleich dieser beiden Werte ermittelt wird, dass der relative Abstand zwischen den Datenpunkten 114 und 116 größer ist, als die Summe ihrer Distanzwerte, kann davon ausgegangen werden, dass in der Nähe der Datenpunkte 114 und 116 eine Materialgrenzfläche 100 angeordnet ist. Anschließend wird für ein weiteres Paar von Datenpunkten 102 der Rasterzelle 110 eine analoge Überlegung durchgeführt. Beispielsweise wird aus der Betrachtung der Datenpunkte 112 und 114 ebenfalls ermittelt, dass in der Nähe eine Materialgrenzfläche 100 angeordnet sein muss. Sobald für zwei Paare von Datenpunkten 102 einer Rasterzelle jeweils festgestellt wurde, dass in der Nähe eine Materialgrenzfläche 100 angeordnet ist, muss sich die Materialgrenzfläche 100 durch jene Rasterzelle 110 erstrecken, welche durch die beiden Paare von Datenpunkten 112 und 114 sowie 114 und 116 begrenzt ist.

Einen alternativen Ansatz zur Ermittlung von Rasterzellen 108, innerhalb derer sich eine Materialgrenzfläche 100 erstreckt, ergibt sich aus einer alternativen Definition der Distanzwerte. Beispielsweise kann hierzu vorgesehen sein, dass Distanzwerte oberhalb der Materialgrenzfläche 100 positiv gezählt werden, während Distanzwerte unterhalb der Materialgrenzfläche 100 negativ gezählt werden. Zur Detektion einer Materialgrenzfläche 100 zwischen zwei Datenpunkten 102 kann dann ermittelt werden, ob von einem ersten Datenpunkt 102 zu einem benachbarten zweiten Datenpunkt 102 ein Vorzeichenwechsel der jeweils zugeordneten Distanzwerte vorliegt. Ist die der Fall, muss zwischen den Datenpunkten eine Materialgrenzfläche 100 liegen.

Wie in der Figur 3 ferner dargestellt ist, werden all jene Datenpunkte 102, welche nicht zu einer der Rasterzellen 108 gehören, innerhalb derer sich eine Materialgrenzfläche 100 erstreckt, aus dem Datensatz gelöscht. Dies ist wiederum durch kleinere Datenpunkte dargestellt.

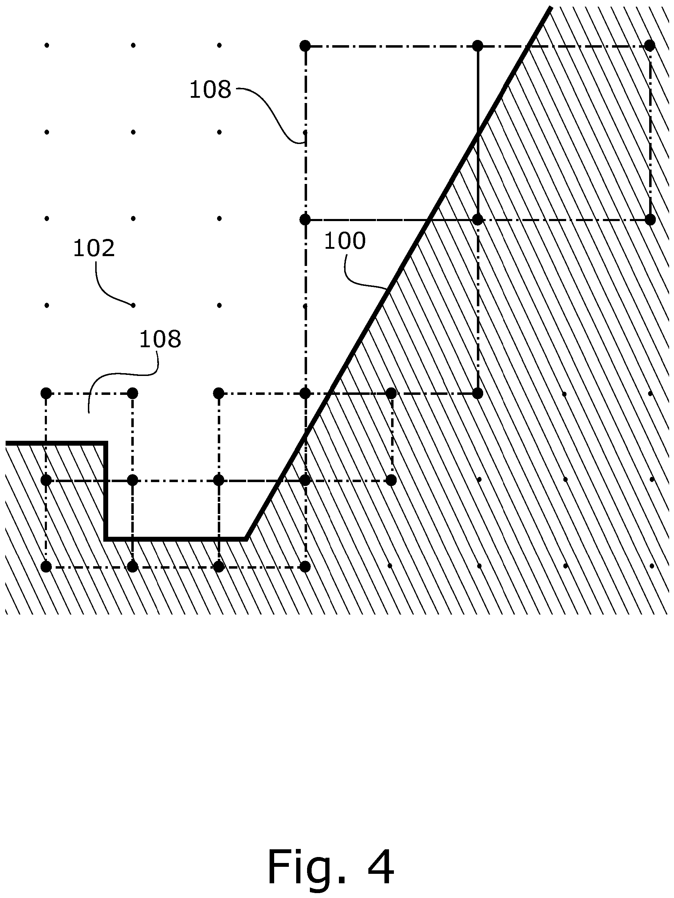

Die Figur 4 zeigt eine schematische Darstellung einer komplexeren Geometrie eines Objekts und einer damit verbundenen variablen Größe des zur Darstellung des Distanzfeldes zu verwendenden Rasters. In der Figur 4 ist in einem unteren linken Bereich des dargestellten Bildausschnitts eine Abfolge von mehreren Ecken der Materialgrenzfläche 100 dargestellt. Um diesen Bereich mit einer ausreichenden Genauigkeit darstellen zu können, ist hier eine enge Rasterung des Distanzfeldes vorgesehen. In einem oberen rechten Bereich des ausgewählten Bildausschnitts ist hingegen die Materialgrenzfläche 100 über einen großen Bereich gleichmäßig linear aufgebaut, sodass hier die Größe der Rasterzellen des zur Darstellung des Distanzfeldes verwendenden Gitters größer gewählt werden kann. Die Anpassung der Größe der Rasterzellen an die Geometrie des dargestellten Objekts kann dabei beispielsweise durch eine Nutzereingabe erfolgen. Alternativ hierzu kann auch vorgesehen sein, dass durch eine Analyse der Materialgrenzfläche 100 bzw. ihres Verlaufes ein Computersystem automatisch erkennt, ob eine Rasterzelle bzw. eine Maschengröße eines Gitters grob oder fein gewählt werden muss, um das dargestellte Objekt hinreichend genau codieren zu können.

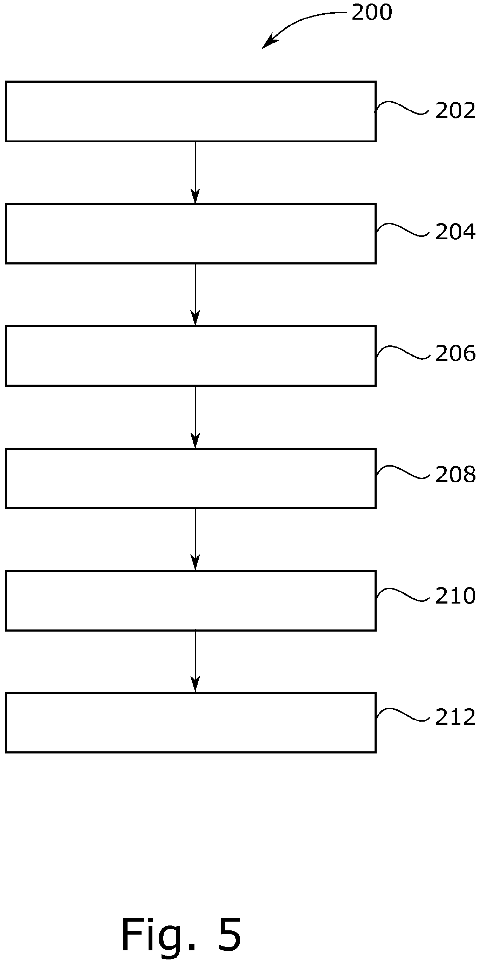

Die Figur 5 zeigt schließlich ein Ablaufdiagramm 200 des erfindungsgemäßen Verfahrens. Dabei wird erfindungsgemäß in einem ersten Verfahrensschritt 202 zunächst die Objektdarstellung des untersuchten Objekts ermittelt. Hierzu kann ein Datenträgermit einer darauf gespeicherten Darstellung des Objekts ausgelesen werden, oder es können Aufnahmen in Form einer Messung des Objekts, beispielsweise im Rahmen einer computertomografischen Untersuchung, vorgenommen werden. Aus den Bildinformationen der Objektdarstellung werden dann in Schritt 204 Distanzwerte für Datenpunkte 102 eines Distanzfeldes ermittelt, welche die Geometrie des abgebildeten Objekts codieren. Ausgehend von diesem Distanzfeld wird anschließend in Schritt 206 ein Nahbereich um eine Materialgrenzfläche des Objekts ermittelt, beispielsweise durch Definition eines Grenzwertes für Distanzwerte von Datenpunkten oder durch Auswahl von Rasterzellen, innerhalb derer sich eine Materialgrenzfläche des dargestellten Objekts erstreckt. In einem Verfahrensschritt 208 wird dann ausgehend von dem zuvor ermittelten Nahbereich eine Menge von Datenpunkten des Distanzfeldes ermittelt, welche außerhalb des Nahbereichs der Materialgrenzfläche liegen. Im Verfahrensschritt 210 werden dann all diese Datenpunkte aus dem Distanzfeld gelöscht und in Schritt 212 wird das so in seinem Datenvolumen reduzierte Distanzfeld als komprimierte Objektdarstellung abgespeichert.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten können sowohl für sich als auch in den verschiedensten Kombinationen erfindungswesentlich sein.

### Bezugszeichenliste

- 100: Materialgrenzfläche
- 102: Datenpunkt
- 104: Band
- 106: Elementarzelle
- 108: Rasterzelle
- 109: Diagonale
- 110: Rasterzelle
- 112: Datenpunkt
- 114: Datenpunkt
- 116: Datenpunkt
- 118: Datenpunkt

## Patentansprüche

1. Computer-implementiertes Verfahren zur Komprimierung einer digitalen Darstellung eines Objekts, wobei die Objektdarstellung eine Vielzahl von Bildinformationen des Objekts aufweist, wobei eine Bildinformation einen Wert einer Messgröße für das Objekt an einer definierten Position des Objekts anzeigt, wobei das Verfahren die folgenden Schritte aufweist:
• ermitteln der Objektdarstellung,
• ermitteln eines Distanzfeldes aus den Bildinformationen der Objektdarstellung, wobei das Distanzfeld eine Vielzahl von in einem Raster angeordneten Datenpunkten (102) aufweist, wobei die Objektdarstellung durch das Distanzfeld überlagert ist, wobei das Distanzfeld den Datenpunkten (102) jeweils wenigstens einen Distanzwert zuordnet, wobei der Distanzwert jeweils den kürzesten Abstand des Datenpunkts (102) zu einer nächstgelegenen Materialgrenzfläche (100) des Objekts angibt, wobei der kürzeste Abstand senkrecht auf der Materialgrenzfläche (100) steht, wobei eine Materialgrenzfläche einen Übergang von einem ersten Material zu einem zweiten Material, insbesondere Luft, aufweist,
• ermitteln eines Nahbereichs um eine Materialgrenzfläche (100) des Objekts, der einen Bereich innerhalb eines vordefinierten Abstands um die Materialgrenzfläche anzeigt,
• ermitteln einer Teilmenge von Datenpunkten (102) des Distanzfeldes, die außerhalb des Nahbereichs der Materialgrenzfläche (100) liegen,
• löschen der Teilmenge von Datenpunkten (102) aus dem Distanzfeld,
• speichern des Distanzfelds als komprimierte Objektdarstellung,
**dadurch gekennzeichnet, dass** der Nahbereich einer Materialgrenzfläche (100) durch einen Grenzwert für einen Distanzwert eines Datenpunktes (102) definiert ist, wobei die jeweiligen Distanzwerte der Datenpunkte (102) der Teilmenge von Datenpunkten (102) größer als der Grenzwert sind, wobei der Grenzwert für den Abstand für unterschiedliche Bereiche der Objektdarstellung jeweils einen anderen Zahlenwert aufweist.

2. Verfahren nach Anspruch 1, **dadurch gekennzeichnet, dass** es sich bei dem Raster des Distanzfelds um ein orthogonales Gitter handelt.

3. Verfahren nach einem der Ansprüche 1 oder 2, **dadurch gekennzeichnet, dass** es sich bei dem Raster des Distanzfelds um ein isotropes Gitter handelt.

4. Verfahren nach einem der Ansprüche 1 oder 2, **dadurch gekennzeichnet, dass** die Grö-ße von Elementarzellen (106) des Rasters des Distanzfelds lokal unterschiedlich ist.

5. Verfahren nach einem der Ansprüche 1 bis 4, **dadurch gekennzeichnet, dass** der Grenzwert für den Abstand dem maximalen Abstand zwischen zwei Punkten innerhalb einer lokalen Elementarzelle (106) des Rasters des Distanzfelds entspricht, innerhalb der sich eine Materialgrenzfläche (100) erstreckt.

6. Verfahren nach einem der Ansprüche 1 bis 4, **dadurch gekennzeichnet, dass** der Grenzwert für den Abstand durch eine Nutzereingabe vorgegeben wird.

7. Verfahren nach einem der vorhergehenden Ansprüche, **dadurch gekennzeichnet, dass** die Bereiche durch eine Nutzereingabe definiert werden.

8. Verfahren nach einem der Ansprüche 1 bis 4, **dadurch gekennzeichnet, dass** das Ermitteln der Teilmenge von Datenpunkten (102) die nachfolgenden Schritte aufweist:
• Einteilen des Rasters des Distanzfelds in eine Vielzahl von Rasterzellen (108), wobei eine Rasterzelle (108) durch Datenpunkte (102, 112, 114, 116, 118) an ihren jeweiligen Ecken begrenzt ist,
• Ermitteln einer Teilmenge von Rasterzellen (108) aus der Vielzahl der Rasterzellen (108), innerhalb derer sich eine Materialgrenzfläche (100) erstreckt, und
• Zuordnen der Datenpunkte (102), welche keine Rasterzelle (108) aus der Teilmenge der der Rasterzellen (108) begrenzen zu der Teilmenge von Datenpunkten (102).

9. Verfahren nach Anspruch 8, **dadurch gekennzeichnet, dass** es sich bei den Rasterzellen (108) um Elementarzellen (106) eines als Raster verwendeten Gitters handelt.

10. Verfahren nach einem der Ansprüche 8 oder 9, **dadurch gekennzeichnet, dass** das Ermitteln der Teilmenge von Rasterzellen (108) die nachfolgenden Schritte aufweist:
a) Auswählen einer Rasterzelle (108) aus der Vielzahl von Rasterzellen (108),
b) Ermitteln von Paaren der die Rasterzelle (108) begrenzenden Datenpunkten (112, 114, 116, 118),
c) Für die ermittelten Paare jeweils das Ermitteln des Relativabstands der Datenpunkte (112, 114, 116, 118) der Paare voneinander,
d) Für die ermittelten Paare jeweils das Ermitteln der Summe der Distanzwerte der Datenpunkte (112, 114, 116, 118),
e) Wenn für wenigstens zwei der Paare der Datenpunkte (112, 114, 116, 118) der Rasterzelle (108) die Summe der Distanzwerte kleiner als der ermittelte Relativabstand ist, das Zuordnen der Rasterzelle (108) zu der Teilmenge von Rasterzellen (108),
wobei die Schritte a) bis e) für die Vielzahl von Rasterzellen (108) wiederholt werden.

11. Verfahren nach einem der vorhergehenden Ansprüche, **dadurch gekennzeichnet, dass** das Ermitteln des Distanzfeldes die nachfolgenden Schritte umfasst:
• ermitteln der Lage von Materialgrenzflächen (100) aus den Bildinformationen der Objektdarstellung,
• ermitteln einer jeweils zu einem Datenpunkt (102) nächstliegenden Materialgrenzfläche (100) für die Datenpunkte (102) des Distanzfeldes,
• ermitteln des jeweiligen Abstands der Datenpunkte (102) von der jeweiligen nächstliegenden Materialgrenzfläche (100), und
• zuordnen des jeweils ermittelten Abstands zu den jeweiligen Datenpunkten (102) als Distanzwert.

12. Verfahren nach einem der vorhergehenden Ansprüche, **dadurch gekennzeichnet, dass** es sich bei der Objektdarstellung um eine gerasterte Darstellung des Objekts handelt, wobei die gerasterte Darstellung eine Vielzahl von in einem Raster angeordneten Messpunkten einer Messung des Objekts aufweist, wobei ein Messpunkt wenigstens eine Bildinformation aufweist, wobei vorzugsweise die Messpunkte in der gerasterten Darstellung in einem regelmäßigen Gitter angeordnet sind, wobei es sich weiter vorzugsweise bei der Messung um eine computertomographische Messung handelt, wobei die Bildinformation eines Bildpunktes die Röntgendichte des Materials des Objekts an der Stelle des Bildpunktes anzeigt.

13. Computerprogrammprodukt mit auf einem Computer ausführbaren Instruktionen, welche auf einem Computer ausgeführt den Computer dazu veranlassen, das Verfahren nach einem der vorhergehenden Ansprüche durchzuführen.

## Claims

1. A computer-implemented method for compressing a digital representation of an object, the object representation comprising a plurality of image information of the object, an image information indicating a value of a measured variable for the object at a defined position of the object, the method comprising the steps of:
- determining the object representation,
- determining a distance field from the image information of the object representation, the distance field having a multiplicity of data points (102) arranged in a grid, the object representation being superimposed by the distance field, the distance field assigning at least one distance value in each case to the data points (102), the distance value indicating in each case the shortest distance of the data point (102) to a nearest material boundary surface (100) of the object, the shortest distance being perpendicular to the material boundary surface (100), a material boundary surface having a transition from a first material to a second material, in particular air,
- determining a proximity area around a material boundary surface (100) of the object indicating an area within a predefined distance around the material boundary surface,
- determining a subset of data points (102) of the distance field that lie outside of the proximity area of the material boundary surface (100),
- deleting the subset of data points (102) from the distance field,
- storing the distance field as a compressed object representation,
**characterized in that** the proximity area of a material boundary surface (100) is defined by a limit value for a distance value of a data point (102), the respective distance values of the data points (102) of the subset of data points (102) being greater than the limit value, the limit value for the distance having a different numerical value in each case for different regions of the object representation.

2. Method according to claim 1, **characterized in that** the grid of the distance field is an orthogonal grid.

3. Method according to one of claims 1 or 2, **characterized in that** the grid of the distance field is an isotropic grid.

4. Method according to one of claims 1 or 2, **characterized in that** the size of elementary cells (106) of the grid of the distance field is locally different.

5. Method according to any one of claims 1 to 4, **characterized in that** the limit value for the distance corresponds to the maximum distance between two points within a local unit cell (106) of the grid of the distance field within which a material boundary surface (100) extends.

6. Method according to any one of claims 1 to 4, **characterized in that** the distance limit value is predetermined by a user input.

7. Method according to any one of the preceding claims, **characterized in that** the areas are defined by a user input.

8. Method according to any one of claims 1 to 4, **characterized in that** determining the subset of data points (102) comprises the following steps:
- dividing the grid of the distance field into a plurality of grid cells (108), a grid cell (108) being bounded by data points (102, 112, 114, 116, 118) at their respective corners,
- determining a subset of grid cells (108) from the plurality of grid cells (108) within which a material boundary surface (100) extends; and
- assigning the data points (102) that do not bound a grid cell (108) from the subset of grid cells (108) to the subset of data points (102).

9. Method according to claim 8, **characterized in that** the grid cells (108) are elementary cells (106) of a grid used as a raster.

10. Method according to any one of claims 8 or 9, **characterized in that** determining the subset of grid cells (108) comprises the following steps:
a) selecting a grid cell (108) from the plurality of grid cells (108),
b) determining pairs of the data points (112, 114, 116, 118) bounding the raster cell (108),
c) for each of the determined pairs, determining the relative distance of the data points (112, 114, 116, 118) of the pairs from each other,
d) for each of the determined pairs, determining the sum of the distance values of the data points (112, 114, 116, 118),
e) if for at least two of the pairs of data points (112, 114, 116, 118) of the raster cell (108) the sum of the distance values is smaller than the determined relative distance, assigning the raster cell (108) to the subset of raster cells (108), wherein steps a) to e) are repeated for the plurality of raster cells (108).

11. Method according to any one of the preceding claims, **characterized in that** determining the distance field comprises the following steps:
- determining the location of material boundary surfaces (100) from the image information of the object representation,
- determining a respective nearest material boundary surface (100) to a data point (102) for the data points (102) of the distance field,
- determining the respective distance of the data points (102) from the respective nearest material boundary surface (100), and
- assigning the respective determined distance to the respective data points (102) as a distance value.

12. Method according to any one of the preceding claims, **characterized in that** the object representation is a rasterized representation of the object, wherein the rasterized representation comprises a plurality of measuring points of a measurement of the object arranged in a raster, wherein a measuring point comprises at least one image information, wherein preferably the measurement points in the rasterized representation are arranged in a regular grid, wherein further preferably the measurement is a computer tomographic measurement, wherein the image information of an image point indicates the X-ray density of the material of the object at the location of the image point.

13. A computer program product comprising computer executable instructions which, when executed on a computer, cause the computer to perform the method of any one of the preceding claims.

## Revendications

1. Procédé mis en oeuvre par ordinateur pour comprimer une représentation numérique d'un objet, la représentation de l'objet comprenant une pluralité d'informations d'image de l'objet, une information d'image indiquant une valeur d'une grandeur de mesure pour l'objet à une position définie de l'objet, le procédé comprenant les étapes suivantes :
- déterminer la représentation de l'objet,
- déterminer un champ de distance à partir des informations d'image de la représentation de l'objet, le champ de distance présentant une pluralité de points de données (102) disposés en une grille, la représentation de l'objet étant superposée par le champ de distance, le champ de distance attribuant respectivement au moins une valeur de distance aux points de données (102), la valeur de distance indiquant respectivement la distance la plus courte du point de données (102) à une surface limite de matériau (100) de l'objet la plus proche, la distance la plus courte étant perpendiculaire à la surface limite de matériau (100), une surface limite de matériau présentant une transition d'un premier matériau à un deuxième matériau, en particulier de l'air,
- déterminer une zone proche autour d'une interface de matériau (100) de l'objet, qui indique une zone située à l'intérieur d'une distance prédéfinie autour de la surface limite de matériau,
- déterminer un sous-ensemble de points de données (102) du champ de distance qui se trouve en dehors de la zone proche de la surface limite de matériau (100),
- supprimer le sous-ensemble de points de données (102) du champ de distance,
- enregistrer le champ de distance sous forme de représentation d'objet comprimée,
**caractérisé en ce que** la zone proche d'une surface limite de matériau (100) est définie par une valeur limite pour une valeur de distance d'un point de données (102), les valeurs de distance respectives des points de données (102) du sous-ensemble de points de données (102) étant supérieures à la valeur limite, la valeur limite pour la distance pour différentes zones de la représentation d'objet présentant respectivement une valeur numérique différente.

2. Procédé selon la revendication 1, **caractérisé en ce que** la grille du champ de distance est une grille orthogonale.

3. Procédé selon l'une des revendications 1 ou 2, **caractérisé en ce que** la grille du champ de distance est une grille isotrope.

4. Procédé selon l'une des revendications 1 ou 2, **caractérisé en ce que** la taille des cellules élémentaires (106) de la grille du champ de distance est localement différente.

5. Procédé selon l'une des revendications 1 à 4, **caractérisé en ce que** la valeur limite de la distance correspond à la distance maximale entre deux points à l'intérieur d'une cellule élémentaire locale (106) de la grille du champ de distance, à l'intérieur de laquelle s'étend une interface de matériau (100).

6. Procédé selon l'une des revendications 1 à 4, **caractérisé en ce que** la valeur limite de la distance est définie par une entrée de l'utilisateur.

7. Procédé selon l'une des revendications précédentes, **caractérisé en ce que** les zones sont définies par une entrée utilisateur.

8. Procédé selon l'une des revendications 1 à 4, **caractérisé en ce que** la détermination du sous-ensemble de points de données (102) comprend les étapes suivantes :
- diviser la grille du champ de distance en une pluralité de cellules de grille (108), une cellule de grille (108) étant délimitée par des points de données (102, 112, 114, 116, 118) à ses coins respectifs,
- déterminer un sous-ensemble de cellules de grille (108) parmi la pluralité de cellules de grille (108), à l'intérieur duquel s'étend une surface limite de matériau (100), et
- affecter au sous-ensemble de points de données (102) les points de données (102) qui ne délimitent aucune cellule de grille (108) parmi le sous-ensemble de cellules de grille (108).

9. Procédé selon la revendication 8, **caractérisé en ce que** les cellules de grille (108) sont des cellules élémentaires (106) d'une grille utilisée comme grille.

10. Procédé selon l'une des revendications 8 ou 9, **caractérisé en ce que** la détermination du sous-ensemble de cellules de grille (108) comprend les étapes suivantes :
a) sélectionner une cellule de grille (108) parmi la pluralité de cellules de grille (108),
b) déterminer des paires de points de données (112, 114, 116, 118) délimitant la cellule de grille (108),
c) pour chacune des paires déterminées, la détermination de la distance relative des points de données (112, 114, 116, 118) des paires les uns par rapport aux autres,
d) pour chacune des paires déterminées, la détermination de la somme des valeurs de distance des points de données (112, 114, 116, 118),
e) si, pour au moins deux des paires de points de données (112, 114, 116, 118) de la cellule de grille (108), la somme des valeurs de distance est inférieure à la distance relative déterminée, l'affectation de la cellule de grille (108) au sous-ensemble de cellules de grille (108),
les étapes a) à e) étant répétées pour la pluralité de cellules de grille (108).

11. Procédé selon l'une des revendications précédentes, **caractérisé en ce que** la détermination du champ de distance comprend les étapes suivantes :
- déterminer la position des surfaces limites de matériau (100) à partir des informations d'image de la représentation de l'objet,
- déterminer une surface limite de matériau (100) respectivement la plus proche d'un point de données (102) pour les points de données (102) du champ de distance,
- déterminer la distance respective des points de données (102) par rapport à la surface limite de matériau (100) respective la plus proche, et
- affecter la distance respectivement déterminée aux points de données (102) respectifs comme valeur de distance.

12. Procédé selon l'une des revendications précédentes, **caractérisé en ce que** la représentation de l'objet est une représentation tramée de l'objet, la représentation tramée présentant une pluralité de points de mesure d'une mesure de l'objet disposés dans une grille, un point de mesure présentant au moins une information d'image, de préférence, les points de mesure dans la représentation tramée sont disposés en une grille régulière, de préférence encore, la mesure est une mesure tomographique par ordinateur, l'information d'image d'un point d'image indique la densité de rayons X du matériau de l'objet à l'emplacement du point d'image.

13. Produit programme d'ordinateur comprenant des instructions exécutables sur un ordinateur, qui, exécutées sur un ordinateur, amènent l'ordinateur à exécuter le procédé selon l'une quelconque des revendications précédentes.
